# DEMANDE DE BREVET EUROPEEN

(11) **EP 1 014 596 A1**
(43) Date de publication de la demande: **28.06.2000**
(21) Numéro de dépôt: 99403131.8
(22) Date de dépôt: 14.12.1999
(51) Int. Cl.: H04B 5/00

(54) **Dispositif de communication basse fréquence par couplage magnétique**

(30) Priorité: 21.12.1998 FR 9816107
(71) Demandeur: VALEO SECURITE HABITACLE, 94000 Créteil (FR)
(72) Inventeur: Avenel, Jean-Jacques, 94430 Chennevieres/Marne (FR); Tessier, Virginie, 94220 Charenton Le Pont (FR)
(74) Mandataire: Abello, Michel

(57) **Abrégé**

L'invention concerne un dispositif de communication basse fréquence par couplage magnétique du type comportant un émetteur de champ magnétique et un récepteur placé dans un organe d'identification, l'un de l'émetteur ou du récepteur étant muni d'une antenne en boucle, dans lequel l'autre de l'émetteur ou du récepteur est constitué par l'association de trois bobinages (1, 2, 3) enroulés autour de trois axes perpendiculaires (Ox, Oy, Oz) définissant un trièdre de façon à obtenir un champ magnétique omnidirectionnel en alimentant lesdits bobinages par des courants de même fréquence.

## Description

La présente invention a pour objet un dispositif de communication basse fréquence par couplage magnétique entre émission par champ magnétique et une antenne de réception.

D'une façon plus particulière, l'antenne d'émission peut être disposée sur un véhicule et l'antenne de réception dans un organe d'identification tel qu'un badge ou une plaque du genre d'une carte de crédit, ce qui permet une identification entre ledit organe et le véhicule et donc, ensuite, l'exploitation de tout signal de commande voulu comme le déverrouillage des portières ou l'allumage des phares ou encore le démarrage à distance du moteur, lorsqu'il est nécessaire de le faire chauffer à l'avance comme c'est le cas dans les pays froids.

Il est connu, en particulier par la demande de brevet JP-62-148044 appartenant à la société "NISSAN MOTOR COMPANY", de disposer dans la portière d'un véhicule deux antennes en boucles orientées à 90° l'une de l'autre de façon à obtenir un champ magnétique dans deux directions de l'espace, ce qui permet de n'avoir sur le badge qu'une antenne réduite qui peut avoir la dimension d'une carte de crédit.

L'inconvénient de ce dispositif est que le champ magnétique d'émission n'émettant que dans deux dimensions, il en résulte que, dans certaines positions du badge récepteur, ce dernier ne reçoit pas le signal, de sorte qu'il n'y a pas communication entre la voiture et le badge.

Le premier objet de la présente invention est de supprimer cet inconvénient en créant un champ magnétique d'émission omnidirectionnel par l'association de trois bobinages selon les trois axes de l'espace.

Le deuxième objet de la présente invention est relatif aux dispositifs de supports de tels trois bobinages associés.

L'invention concerne donc un dispositif de communication basse fréquence par couplage magnétique du type comportant un émetteur de champ magnétique et un récepteur placé dans un organe d'identification, l'un de l'émetteur ou du récepteur étant muni d'une antenne en boucle, caractérisé par le fait que l'autre de l'émetteur ou du récepteur est constitué par l'association de trois bobinages enroulés autour de trois axes sensiblement perpendiculaires définissant un trièdre de façon à obtenir un champ magnétique omnidirectionnel en alimentant lesdits bobinages par des courants de même fréquence.

Avantageusement, le champ magnétique omnidirectionnel est généré en alimentant les trois bobinages par des courants déphasés de 60° ou 120° environ.

Les trois bobinages peuvent être enroulés l'un sur l'autre sur un noyau commun aux trois bobinages. Les trois bobinages de l'émetteur peuvent être disposés sur un même noyau sphérique ; ce noyau peut aussi être un parallélépipède autour des six faces duquel sont enroulés les trois bobinages ; dans une variante, ce noyau forme une plaquette parallélépipèdique de faible épaisseur, l'un des bobinages étant enroulé en travers du noyau, au voisinage de sa partie médiane, le deuxième bobinage étant enroulé autour des deux grandes faces les plus longues du noyau et le troisième étant enroulé sur la tranche de faible épaisseur du noyau.

On peut aussi prévoir que les trois bobinages soient enroulés sur deux noyaux distincts ; l'un des noyaux a, par exemple, une forme approximativement cubique et l'autre a, par exemple, la forme d'une plaquette de relativement faible épaisseur, l'un des bobinages étant enroulé sur la tranche de la plaquette de faible épaisseur, les deux autres étant croisés à 90° sur le noyau de forme approximativement cubique.

Selon un mode de réalisation préféré, l'émetteur de champ magnétique est constitué par l'association des trois bobinages et il est incorporé dans un véhicule et le récepteur constitué de l'antenne en boucle est incorporé dans l'organe d'identification ; en variante, l'émetteur de champ magnétique, constitué d'une antenne en boucle, est incorporé dans un véhicule et le récepteur constitué par l'association des trois bobinages est incorporé dans l'organe d'identification ; l'organe d'identification et son antenne peuvent être sensiblement plans.

Avantageusement, le(s) noyau(x) est (sont) constitué(s) d'un matériau magnétique, mais il(s) pourrai(en)t être constitué(s) en un matériau transparent du point de vue magnétique. Le(s) noyau(x) comporte(nt), de préférence, des embrèvements pour positionner et loger les bobinages de l'émetteur.

A titre d'exemples non limitatifs et pour faciliter la compréhension de l'invention, on a représenté sur le dessin annexé :
- figure 1 : une représentation purement géométrique illustrant les positions respectives, dans l'espace, des trois bobinages permettant d'avoir un diagramme d'émission omnidirectionnel ;
- figure 2 : une vue en perspective d'un premier mode de réalisation d'un dispositif portant trois bobinages à 90° bobinés les uns sur les autres sur un parallélépipède ;
- figure 2A : une coupe selon IIA-IIA de la figure 2 ;
- figure 3 : une vue en perspective d'un deuxième mode de réalisation du dispositif selon l'invention, le noyau étant une plaquette parallélépipédique ;
- figure 3A : une vue en perspective de la plaquette de la figure 3 sans ses bobinages ;
- figure 3B : une coupe selon IIIB-IIIB de la figure 3 ;
- figure 4 : une vue en perspective d'un troisième mode de réalisation du dispositif selon l'invention réalisé avec deux noyaux distincts ;
- figure 5 : une vue en perspective montrant le dispositif de la figure 4 mis en place dans une poignée de portière de véhicule automobile.

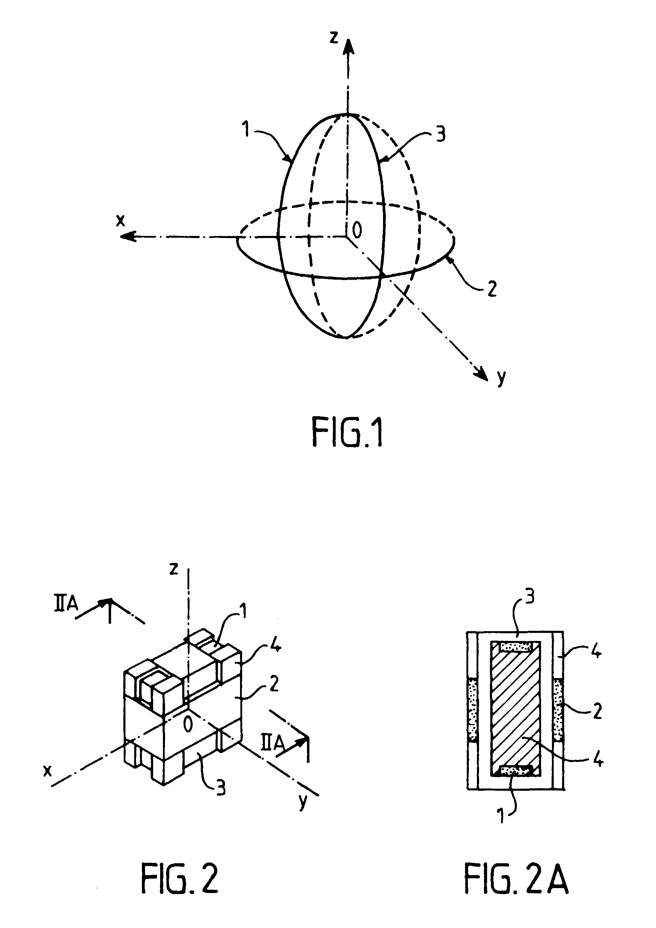

La figure 1 est une vue géométrique illustrant la disposition dans l'espace des trois bobinages, chacun étant représenté par un cercle.

Le bobinage 1 est dans un plan vertical et a pour axe Oy ; le bobinage 2 est dans un plan horizontal perpendiculaire au premier et a pour axe Oz ; le bobinage 3 est dans un plan vertical, perpendiculaire aux deux précédents, et a pour axe Ox. Les trois axes Ox, Oy et Oz forment un trièdre.

Les trois bobinages 1, 2 et 3 sont traversés par des courants de même fréquence et sont déphasés de 120° ou de 60°. On obtient ainsi un champ magnétique d'émission omnidirectionnel.

Les trois bobinages de l'émetteur peuvent être portés par un même noyau sphérique ; à titre d'exemple, le noyau peut avoir un diamètre de 70 mm ; chaque bobinage peut comporter 150 spires de fil de cuivre émaillé de 0,15 mm de diamètre ; la fréquence du courant d'alimentation est de 125 KHz ; les alimentations sont déphasées de 120° grâce à un registre à décalage.

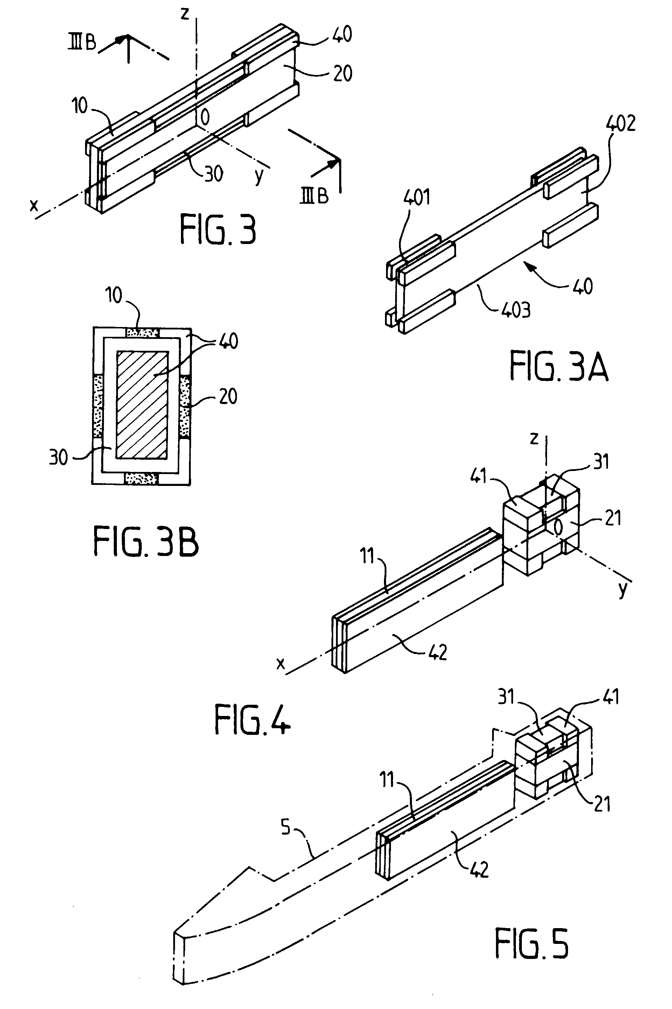

Les trois bobinages peuvent être portés par un même support ou noyau ou par des supports (ou noyaux) différents. Sur les figures 2 et 3, ils sont sur un support commun ; sur la figure 4, ils sont placés sur deux supports séparés.

Dans toutes les réalisations du dispositif selon l'invention, ces supports ou noyaux peuvent être réalisés soit dans un matériau transparent du point de vue magnétique, soit dans un matériau magnétique tel que ferrite ou plastoferrite. L'utilisation d'un plastoferrite est préférable parce que ce matériau est facilement usinable et que, ayant une perméabilité magnétique initiale relative supérieure à l'unité, il augmente le champ magnétique rayonné pour un même encombrement de bobinage.

La figure 2 est une vue en perspective d'un premier mode de réalisation. Le noyau 4 est un parallélépipède presque cubique. Le bobinage 1, d'axe Oy, est mis en place le premier ; puis le bobinage 3, d'axe Ox, est enroulé sur le premier, à 90° et finalement le bobinage 2 d'axe Oz. Le noyau 4 comporte des embrèvements pour positionner et loger les bobinages de façon que les faces de l'émetteur ne présentent pas de surépaisseur.

La figure 3 représente une variante dans laquelle le noyau est une plaquette parallélépipèdique 40 de relativement faible épaisseur.

Le bobinage 30, d'axe Oz, est d'abord enroulé sur la partie médiane de la plaquette 40 constituant le noyau, en travers de ce noyau ; puis le bobinage 20 d'axe Oz est enroulé le long des deux grandes faces les plus longues de la plaquette 40 ; et, enfin, le bobinage 10, d'axe Oy, est enroulé au dessus des autres sur la tranche de faible épaisseur de la plaquette 40. La plaquette 40 comporte des embrèvements 401, 402, 403 pour positionner et loger respectivement les bobinages 10, 20 et 30 sur le noyau, comme représenté sur la figure 3A. La plaquette 40 peut être constituée d'un seul bloc usiné ou peut être formée par l'assemblage, sur une barrette strictement parallélépipèdique, d'un ou deux embouts à chaque extrémité de la barrette ; lorsque l'on utilise deux embouts à chaque extrémité, les quatre embouts sont des pièces identiques, simples à usiner.

La figure 4 représente une variante selon laquelle les trois bobinages sont répartis sur deux noyaux 41 et 42. Le noyau 41 a une forme analogue à celle du noyau 4 de la figure 2. Deux bobinages seulement y sont enroulés : d'abord le bobinage 31 d'axe Ox et, ensuite, par-dessus, le bobinage 21 d'axe Oz. Le noyau 42, séparé du noyau 41, a la forme d'une plaquette allongée analogue à la forme du noyau de la Fig. 3 : un seul bobinage y est enroulé, le bobinage 11 d'axe Oy. Comme dans le cas de la Fig. 3, ce bobinage 11 est enroulé sur la tranche de faible épaisseur de la plaquette 42. Les noyaux 41 et 42 comportent des embrèvements analogues à ceux des noyaux 4 et 40 pour éviter des surépaisseurs.

Cette disposition selon la Fig. 4 permet la mise en place aisée des trois bobinages dans la poignée 5 d'une portière de véhicule automobile. Le noyau 42, de forme allongée, se place facilement dans la palette plate qui constitue la poignée de portière du véhicule, tandis que le noyau 41, plus compact, se loge à l'extrémité de l'articulation de la poignée.

Il est bien évident que, sans sortir du domaine de l'invention, il est possible d'intervertir la position des pièces : un récepteur à champ magnétique à trois bobinages se trouvant entre les mains de l'utilisateur, dans la boule d'un porte-clés par exemple, un émetteur à antenne à simple boucle étant en tout endroit approprié du véhicule.

## Revendications

1. Dispositif de communication basse fréquence par couplage magnétique du type comportant un émetteur de champ magnétique placé dans un véhicule et un récepteur placé dans un organe d'identification, l'un de l'émetteur ou du récepteur étant muni d'une antenne en boucle, caractérisé par le fait que l'autre de l'émetteur ou du récepteur est constitué par l'association de trois bobinages (1, 2, 3 ; 10, 20, 30 ; 11, 21, 31) qui sont enroulés autour de trois axes perpendiculaires (Ox, Oy, Oz) définissant un trièdre de façon à obtenir un champ magnétique omnidirectionnel, et qui sont alimentés par des courants de même fréquence et déphasés de 60° ou 120°.

2. Dispositif selon la revendication 1, caractérisé par le fait que les trois bobinages (1, 2, 3 ; 10, 20, 30) sont enroulés l'un sur l'autre sur les six faces d'un parallélépipède (4, 40), qui constitue un noyau commun aux trois bobinages.

3. Dispositif selon la revendication 2, caractérisé par le fait que les trois bobinages (10, 20, 30) sont enroulés l'un sur l'autre sur les six faces d'un noyau (40) formant une plaquette parallélépipèdique (40) de faible épaisseur, l'un des bobinages (30) étant enroulé en travers du noyau (40), au voisinage de sa partie médiane, le deuxième bobinage (20) étant enroulé autour des deux grandes faces les plus longues du noyau (40) et le troisième (10) étant enroulé sur la tranche de faible épaisseur du noyau (40).

4. Dispositif selon la revendication 1, caractérisé par le fait que les trois bobinages (11, 21, 31) sont enroulés sur deux noyaux (41, 42) distincts, l'un (41) des noyaux ayant une forme approximativement cubique et l'autre (42) ayant la forme d'une plaquette de relativement faible épaisseur, l'un des bobinages (11) étant enroulé sur la tranche du noyau (42) de faible épaisseur, les deux autres (21 et 31) étant croisés à 90° sur le noyau (41) de forme approximativement cubique.

5. Dispositif selon l'une des revendications 1 à 4, caractérisé par le fait que l'émetteur de champ magnétique est constitué par l'association des trois bobinages, et que le récepteur est constitué de l'antenne en boucle.

6. Dispositif selon l'une des revendications 1 à 4, caractérisé par le fait que l'émetteur de champ magnétique est constitué d'une antenne en boucle, et que le récepteur est constitué par l'association des trois bobinages.

7. Dispositif selon l'une des revendications 1 à 6, caractérisé par le fait que l'organe d'identification et son antenne sont sensiblement plans.

8. Dispositif selon l'une des revendications 2 à 4, caractérisé par le fait que le(s) noyau(x) (4 ; 40 ; 41, 42) est (sont) constitué(s) d'un matériau magnétique.

9. Dispositif selon la revendication 1, caractérisé par le fait que les trois bobinages de l'émetteur sont disposés sur un même noyau sphérique.

10. Dispositif selon l'une des revendications 2 ou 4, caractérisé par le fait que le(s) noyau(x) (4 ; 40 ; 41, 42) comporte(nt) des embrèvements pour positionner et loger les bobinages (1, 2, 3 ; 10, 20, 30 ; 11, 21, 31) de l'émetteur.
